# EUROPEAN PATENT SPECIFICATION

(11) **EP 2 599 179 B1**
(45) Date of publication and mention of the grant of the patent: **17.02.2016**
(21) Application number: 10798721.6
(22) Date of filing: 27.07.2010
(51) Int. Cl.: H02H 9/08, H02J 3/26, H02J 3/38

(54) **THE APPARATUS COMPENSATING GROUND CURRENTS CONNECTED TO A TRANSFORMER NEUTRAL POINT**
VORRICHTUNG ZUR KOMPENSATION EINES FEHLERSTROMES BEI EINEM ERDSCHLUSS VERBUNDEN MIT DEM STERNPUNKT EINES TRANSFORMATORS
DISPOSITIF DE COMPENSATION D'UN COURANT DE DÉFAUT À LA TERRE RELIÉ AU NEUTRE D'UN TRANSFORMATEUR

(43) Date of publication of application: 05.06.2013
(73) Proprietor: Západoceská univerzita v Plzni, 30614 Plzen (CZ)
(72) Inventor: PEROUTKA, Zdenek, 31200 Plzen (CZ); MATULJAK, Ivan, 37011 Ceské Budejovice (CZ)
(74) Representative: Langrova, Irena
(86) International application number: PCT/CZ2010/000084
(87) International publication number: WO 2012/013165

(56) References cited:
- EP-A1- 2 128 951
- EP-A2- 1 855 366
- WO-A2-02/15355
- WINTER K M: "Swedish distribution networks-a new method for earthfault protection in cable- and overhead systems", DEVELOPMENTS IN POWER SYSTEM PROTECTION, 1993., FIFTH INTERNATIONAL CO NFERENCE ON YORK, UK, LONDON, UK,IEE, UK, 1 January 1993 (1993-01-01), pages 268-270, XP006514559, ISBN: 978-0-85296-559-7

## Description

### Technical field

The invention concerns an apparatus connected to the transformer neutral point used for compensation of ground fault currents. It is aimed especially at the compensation of fault curents at the point where there is an accidental contact with ground in a distribution system.

### Background and summary of the invention

The current solution employs a continuously tunable neutral-earthing reactor connected in-between the transformer neutral point and earth potential to compensate for fault capacitive current while an accidental contact with ground (so-called ground fault) occurs. If the distribution system is insulated, i.e. a transformer does not have the neutral point terminal and compensation of fault currents is required, a device for creating the artificial neutral point must be used. It means using a so-called earthing transformer or Bauch's transformer with a tunable earthing reactor connected to the secondary winding of this transformer. This earthing reactor is tuned into resonance with the overall capacity of the distribution system and it compensates for capacitive current of the distribution system while there is a ground fault. The compensations of the active (resistive) fault current are based on the principle of current injection into an auxiliary winding of the earthing reactor. The disadvantage of this system is its big power consumption that requires its own power supply (it usually requires connection of this system to a substation self-consumption supply). The compensation of phase non-symetry of the distribution system is done indirectly by inserting a damping resistor into an auxiliary winding of the earthing reactor. It is important to highlight that the inserted resistor increases active component of the fault current if a ground fault (i.e. a contact of single phase with ground) occurs. The damping resistor is not constructed for permanent load during the contact of single phase with ground and therefore it must be disconnected. The compensation of the phase non-symmetry in the distribution system is also done directly by inserting a variable earthing inductance or capacitance in-between each phase of a power grid and the point of earth potential. By tuning the earthing reactances into resonance with each phase capacitive component the system compensates for fault capacitive current. The compensation of the active current component while there is a fault state is done by appropriate tuning of earthing reactances of phases that are not affected by the fault.

The present methods and devices used for compensation of ground fault currents are usually based on the above-mentioned resonance methods. In fault (limit) states, this resonace principle (more exactly resonance) may cause very dangerous overvoltages and overcurrents in the distribution system. The serious disadvantage of the existing devices for compensation of ground fault currents is their inability to eliminate higher harmonics of fault currents. In case of ground fault, the first harmonic of the ground fault current is suppressed, while non-negligible higher harmonics of the ground fault current flow permanently through the point of contact with the ground. Other disadvantages of some of the present qualitatively equivalent solutions are their dimensions and weight, as well as their price in a wide power range.

One of possible devices is know from a file EP 2 128 951 A1. This device is considered to be the closest prior art. The device is a voltage source which is connected via coupling transformer in series with the ground and neutral. The apparatus controls the voltage of this source and by setting the appropriate voltage it achieves, as an indirect result according to Kirchhoff's law, flow of the compensating current to the ground which leads to the mitigation of the ground fault. However, this device does not compensate the unbalance of the electric system in the fault-free operation of the electric system. It only takes into account potential unbalance in the "maintenance mode", when the insulation of the electric system is under the test. Moreover, the device comprises a resistor which is connected via contactor in parallel to the secondary winding of a coupling transformer in order to damp transient effects in the electric system.

The main objective of this invention is to create new equipment that will eradicate the disadvantages of the present solutions and at the same time to find as many functions as possible that could be performed by this new device.

A solution meeting the objective is a device as defined in claim 1 for compensation of ground fault currents connected to the transformer neutral point of a distribution system. It is based on the insertion of a controlled current source in-between the transformer neutral point and the earth potential, firstly for compensation of ground fault currents and higher harmonics of fault currents at the point of ground fault, and secondly for compensation of phase non-symmetry in trouble-free state of the distribution system.

The main advantage of the invention consists in the fact that a controlled current source is continuosly tunable allowing to generate practically arbitrary curve of the current, with a variable magnitude of the fundamental harmonic as well as higher harmonics, and also variable phase-shift for each harmonic component of the generated compensating current. By employing compensating current, a controlled current source has a direct countereffect on ground fault currents at the point of the contact with ground. A significant advantage of the invention is the possibility of compensation of not only the fundamental harmonic of the fault current but also of its higher harmonics.

A voltage source inverter can be used as the controlled current source. It can be connected to an auxiliary winding of the neutral-earthing reactor or to the neutral point of distribution system transformer via the converter transformer. The voltage source inverter can be also directly connected at its ac side through an input inductor to the transformer neutral point of the distribution system. The voltage source inverter must be completed by a current control loop of the current on its ac side.

A current source inverter can also be used as the controlled current source. It can be connected similarly as the voltage source inverter to an auxiliary winding of the neutral-earthing reactor or to the neutral point of distribution system transformer via the converter transformer. It is necessary to include a capacitor into the auxiliary winding of a neutral-earthing reactor or into the secondary winding of the transformer. The capacitor is connected to the ac terminals of the current source inverter. It is also possible to directly connect the current source inverter at its ac side through an input inductor to the transformer neutral point of the distribution system. Again, it is necessary to complete this connection with a capacitor at the ac terminals of the current source inverter. The current source inverter must be completed by a current control loop of the current on its ac side.

A frequency converter can also be used as the controlled current source. An indirect frequency converter can be used for the desired functions of the invention, either with a voltage source inverter at its output or with a current source inverter at its output. The connection of the power converter to the transformer neutral point depends on the type of employed inverter. It is described above, including the closed control loop of the current. The input part of the frequency converter must be connected to the power suply, e.g. it can be connected through an input converter transformer to the substation self-consumption supply.

Considering the state of the art in power electronics technology, a controlled current source based on the voltage source inverter or an indirect frequency converter with a voltage source inverter seems to be the optimal solution.

It is evident that the account of the above-mentioned particular components constituting a controlled current source is not complete. Under certain conditions this task can be performed for example by an active voltage source rectifier, an active current source rectifier, a direct frequency converter or a matrix converter.

### Brief description of drawings

The invention is further explained by means of the drawings. Fig. 1 shows a diagram of circuitry of equipment based on the invention, Fig. 2 shows a vector diagram describing a method of the compensation of ground fault currents, and Fig. 3 presents a vector diagram describing a compensation of phase non-symmetry during a trouble-free state of the distribution system.

### Description of the preferred embodiments

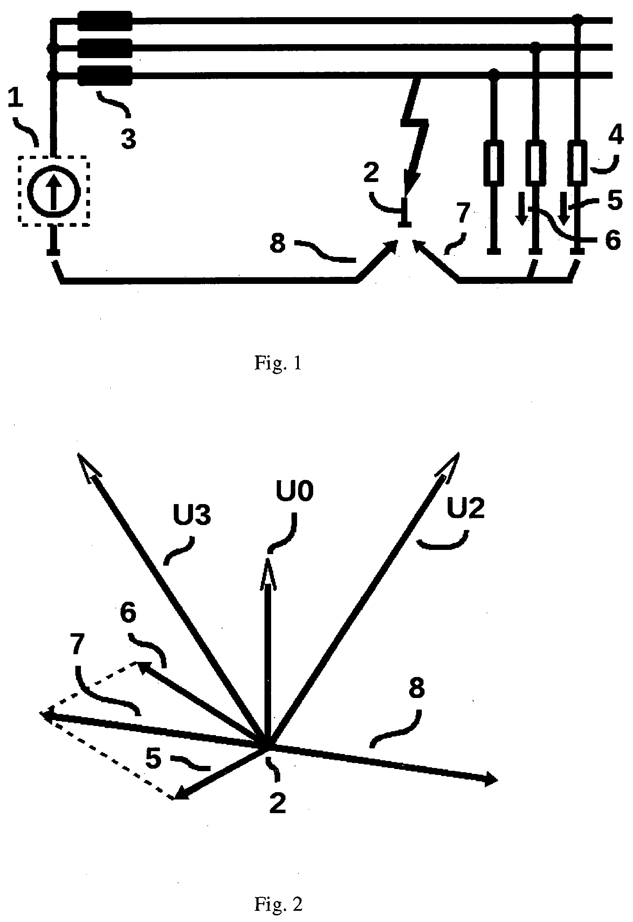

Figure 1 presents a version of the invention with a controlled current source **1,** connected in-between transformer neutral point **3** and an earth potential. It also shows the impedances **4** of phase conductors against the earth potential in the distribution system, and fault currents **5,6** and **7** flowing in the circuit.

The controlled current source **1** is created as a power electronics converter (in the following text also referred as PEC). A controlled current source can generate an arbitrary current curve of a variable magnitude of the fundamental harmonic as well as higher harmonics and also a variable phase shift for each harmonic component of the generated current.

A fault current **7** is identified during a ground fault **2** occurring in one of the phases of the distribution system. The estimated current **7** serves as a command for a current control loop of PEC. A current source **1** generates compensating current **8** of the same magnitude as fault current **7,** but with a reversed polarity. A current controller ensures correct setting of the appropriate compensating current **8,** eliminating the fault currents. A controlled current source **1** works similarly also in compensation of higher harmonics of fault currents, eliminating particular harmonic components, such as the 5th, 7th, 11th and 13th harmonic. The explained effect is described in a vector diagram in Fig. 2.

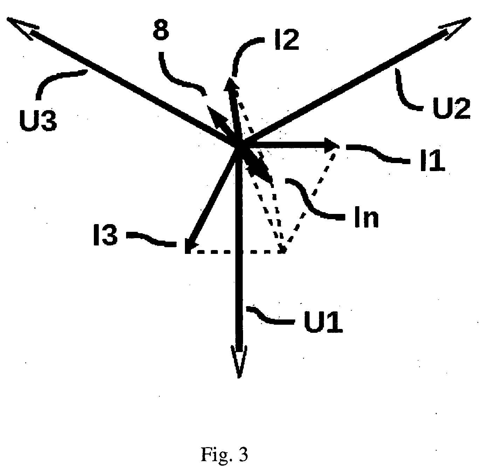

This invention makes it possible to compensate for a phase non-symmetry of the distribution system in trouble-free state. This is accomplished by setting the controlled current source **1** so as to compensate the current causing phase non-symmetry in the distribution system. This effect is described in a vector diagram in Fig. 3.

Voltage **U0** is in-between a transformer neutral point **3** and the earth potential (see the vector diagrams). **U0** can reach up to the level of the phase voltage (L-N) during ground faults. The phase voltages in phases that are not affected by ground fault can reach up to the level of the line to line voltages. **U1 ,U2, U3** are the phase voltages against the earth potential (see the vector diagrams). In a trouble-free state of the distribution system currents **I1, I2, I3** flow through the phase ground impedances into the earth. The current resulting from non-symmetry of the ground impedances is denoted **In.**

Besides the above-mentioned functions, a very important quality of the device built according to the invention is that it also performs a compensation of phase non-symmetry during a trouble-free state of the distribution system. Again, this is performed through a direct countereffect of compensating current on a current causing phase non-symmetry in the distribution system. The device described above is markedly more variable compared to other solutions that do not allow to perfom many of its functions, especially a compensation of higher harmonics of a fault current. Other advantages over some of the present qualitatively equivalent solutions are its dimensions and weight, as well as a lower price in wide power range. The device according to the invention is markedly immune against non-symmetries and possible changes of circuit parameters. The great advantage of this solution compared to the existing ones is its robustness.

## Claims

1. An apparatus for compensating ground fault currents connected to a neutral point of a distribution system transformer **characterized by that** it is a controlled current source (1) connected in-between the transformer neutral point (3) and the earth potential and configured to compensate ground fault currents and higher harmonics of fault currents at the point of ground fault, further configured to compensate phase non-symmetry in trouble-free state of the distribution system.

2. A device according to claim 1 **characterized by** that the controlled current source (1) is created by a voltage source inverter.

3. A device according to claim 1 **characterized by** that the controlled current source (1) is created by a current source inverter.

4. A device according to claim 1 **characterized by** that the controlled current source (1) is created by a frequency converter.

## Patentansprüche

1. Vorrichtung zur Kompensation des Fehlerstromes bei einem Erdschluss, verbunden mit dem Sternpunkt eines Transformators des Verteilungssystems, **dadurch gekennzeichnet, dass** es eine geregelte Stromquelle (1) ist, die zwischen dem Sternpunkt (3) des Transformators und dem Erdpotential geschaltet und zur Kompensation der Fehlererdströme und der höheren Harmonischen der Fehlererdströme im Erdschluss angeordnet und weiter zur Kompensation der Phasenasymmetrie im störungsfreien Zustand des Verteilungssystems zusammengesetzt ist.

2. Die Vorrichtung nach dem Anspruch 1, **dadurch gekennzeichnet, dass** die geregelte Stromquelle (1) durch einen Spannungsquelleninverter gebildet ist.

3. Die Vorrichtung dem Anspruch 1 zufolge, **dadurch gekennzeichnet, dass** die geregelte Stromquelle (1) durch einen Stromquelleninverter geschaffen ist.

4. Die Vorrichtung dem Anspruch 1 gemäß, **dadurch gekennzeichnet, dass** die geregelte Stromquelle (1) durch einen Frequenzumformer gestaltet ist.

## Revendications

1. Dispositif de compensation d'un courant de défaut à la terre relié au neutre d'un transformateur du système de distribution, **caractérisé en ce qu**'il consiste d'une source de courant commandée (1), connectée entre le neutre (3) du transformateur et le potentiel de terre et configurée pour compenser des courants de défaut à la terre et des composantes harmoniques élevées des courants de défaut en le point de défaut à la terre et en outre configurée afin de compenser l'asymétrie de phase en état sans pannes du système de distribution.

2. Le dispositif selon le revendication 1, **caractérisé en ce que** la source de courant commandée (1) est créée par un inverseur de source de tension.

3. Le dispositif selon le revendication 1, **caractérisé en ce que** la source de courant commandée (1) est créée par un inverseur de source de courant.

4. Le dispositif suivant le revendication 1, **caractérisé en ce que** la source de courant commandée (1) est créée par un convertisseur de fréquence.
